# EUROPÄISCHE PATENTANMELDUNG

(11) **EP 4 002 567 A1**
(43) Veröffentlichungstag der Anmeldung: **25.05.2022**
(21) Anmeldenummer: 21206168.3
(22) Anmeldetag: 03.11.2021
(51) Int. Cl.: H01M 50/249, H01M 50/262, H01M 50/296, H01M 50/50, B60L 50/64

(54) **KOPPLUNGSSCHNITTSTELLE ZUR MECHANISCHEN UND ELEKTRISCHEN KOPPLUNG EINES FORTBEWEGUNGSMITTELS UND EINER BATTERIE**

(30) Priorität: 18.11.2020 DE 102020214504
(71) Anmelder: Robert Bosch GmbH, 70442 Stuttgart (DE)
(72) Erfinder: Hauser, Fabian, 74245 Loewenstein (DE); Landa, Sven, 71732 Tamm (DE)

(57) **Zusammenfassung**

Die vorgestellte Erfindung betrifft eine Batterie (100, 200) zum Versorgen eines Antriebs eines Fortbewegungsmittels (300) mit elektrischer Energie. Die Batterie (100, 200) umfasst eine Anzahl Batteriezellen (103) und eine Kopplungsschnittstelle (105, 205) zur mechanischen und elektrischen Kopplung mit dem Fortbewegungsmittel (300), wobei die Kopplungsschnittstelle (105, 205) dazu konfiguriert ist, positionsfest an einer Gegenkopplungsschnittstelle (107, 207) des Fortbewegungsmittels (300) angeordnet zu werden und die Batterie (100, 200) dadurch mechanisch mit der Gegenkopplungsschnittstelle (107, 207) zu koppeln, wobei die Kopplungsschnittstelle (105, 205) weiterhin dazu konfiguriert ist, elektrische Energie zwischen der mindestens einen Gegenkopplungsschnittstelle (107, 207) des Fortbewegungsmittels (300) und der Batterie (100, 200) zu übertragen, und die Batterie (100, 200) dadurch elektrisch mit der Gegenkopplungsschnittstelle (107, 207) des Fortbewegungsmittels (300) zu koppeln.

## Beschreibung

Die vorgestellte Erfindung betrifft eine Batterie, ein Fortbewegungsmittel und ein Kopplungsverfahren.

### Stand der Technik

Batterien für Fortbewegungsmittel, wie bspw. Fahrzeuge, sind in der Regel austauschbar an einem Fortbewegungsmittel angeordnet. Entsprechend muss eine Batterie eine mechanische Kopplungsschnittstelle, wie bspw. einen Bolzen aufweisen, der die Batterie an dem Fortbewegungsmittel fixiert.

Zusätzlich zur mechanischen Kopplung umfassen bekannte Batterien elektrische Schnittstellen zur Übertragung von elektrischer Energie zu einem Fortbewegungsmittel.

Entsprechend sind zum Anschließen einer Batterie an ein Fortbewegungsmittel unter Verwendung bekannter Batterien mindestens zwei Vorgänge notwendig, eine mechanische Kopplung, bei der eine mechanische Schnittstelle der Batterie mit dem Fortbewegungsmittel verbunden wird und eine elektrische Kopplung, bei der eine elektrische Schnittstelle der Batterie, bspw. über eine Steckverbindung mit einem Kabel des Fortbewegungsmittels, verbunden wird.

### Offenbarung der Erfindung

Im Rahmen der vorgestellten Erfindung werden eine Batterie, ein Fortbewegungsmittel und ein Verbindungsverfahren zum Verbinden einer Batterie mit einem Fortbewegungsmittel mit den Merkmalen der jeweiligen unabhängigen Patentansprüche vorgestellt. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Batterie beschrieben sind, selbstverständlich auch im Zusammenhang mit dem erfindungsgemäßen Fortbewegungsmittel und dem erfindungsgemäßen Verbindungsverfahren und jeweils umgekehrt, sodass bezüglich der Offenbarung zu den einzelnen Erfindungsaspekten stets wechselseitig Bezug genommen wird bzw. werden kann.

Die vorgestellte Erfindung dient insbesondere dazu, einen einfachen und schnellen Austausch einer Batterie an einem Fortbewegungsmittel zu ermöglichen.

In einem ersten Aspekt betrifft die vorgestellte Erfindung eine Batterie zum Versorgen eines Antriebs eines Fortbewegungsmittels mit elektrischer Energie. Die Batterie umfasst eine Anzahl Batteriezellen und eine Kopplungsschnittstelle zur mechanischen und elektrischen Kopplung mit dem Fortbewegungsmittel. Die Kopplungsschnittstelle ist dazu konfiguriert, positionsfest an einer Gegenkopplungsschnittstelle des Fortbewegungsmittels angeordnet zu werden und die Batterie dadurch mechanisch mit der Gegenkopplungsschnittstelle zu koppeln. Die Kopplungsschnittstelle ist weiterhin dazu konfiguriert, elektrische Energie zwischen der mindestens einen Gegenkopplungsschnittstelle des Fortbewegungsmittels und der Batterie zu übertragen, und die Batterie dadurch elektrisch mit der Gegenkopplungsschnittstelle des Fortbewegungsmittels zu koppeln.

Unter einer mechanischen Kopplung ist im Kontext der vorgestellten Erfindung eine Anordnung eines ersten Elements, insbesondere einer Batterie, an einem zweiten Element, insbesondere einem Fortbewegungsmittel, zu verstehen, bei der das erste Element durch jeweilige die mechanische Kopplung bereitstellende Kopplungselemente an dem zweiten Element fixiert und dort entsprechend positionsfest gesichert wird. Entsprechend wird bei einer mechanischen Kopplung das erste Element an dem zweiten Element derart fixiert, dass keine oder nur eine geringe Bewegung des ersten Elements relativ zu dem zweiten Element möglich ist. Bei einer mechanischen Kopplung werden insbesondere Kräfte, wie bspw. Beschleunigungskräfte, die auf das zweite Element wirken, auf das erste Element übertragen, sodass das erste Element lediglich zusammen mit dem zweiten Element bewegt werden kann und das erste Element an dem zweiten Element gesichert ist.

Unter einer elektrischen Kopplung ist im Kontext der vorgestellten Erfindung eine elektrisch leitende Verbindung zwischen einem ersten Element, insbesondere einer Batterie und einem zweiten Element, insbesondere einem Fortbewegungsmittel, zu verstehen. Bei einer elektrischen Kopplung wird elektrische Energie durch elektrischen Strom mit einer entsprechenden Spannung zwischen dem ersten Element und dem zweiten Element, d.h. von der Batterie zu dem Fortbewegungsmittel oder umgekehrt, übertragen.

Unter einem Fortbewegungsmittel ist im Kontext der vorgestellten Erfindung eine Maschine zum Bewegen einer Ladung, insbesondere ein Fahrzeug mit mindestens einem, vorzugsweise 2, 3, 4 oder mehr Rädern, zu verstehen. Ein Fortbewegungsmittel kann ein Flugzeug, ein Schiff oder jedes weitere zum Transportieren einer Ladung zwischen zwei Orten geeignete Objekt sein.

Die vorgestellte Batterie umfasst eine Kopplungsschnittstelle, die zur mechanischen und elektrischen Kopplung der Batterie mit einem Fortbewegungsmittel konfiguriert ist. Entsprechend erfüllt die Kopplungsschnittstelle eine Doppelfunktion, nämlich ein zeitgleiches bzw. gemeinsames Anordnen der Batterie an dem Fortbewegungsmittel sowie ein Herstellen einer elektrisch leitenden Verbindung zwischen der Batterie und dem Fortbewegungsmittel.

Aufgrund der Doppelfunktion der Kopplungsschnittstelle der vorgestellten Batterie kann auf aufwendige Konstruktionen von getrennt ausgestalteten mechanischen und elektrischen Schnittstellen verzichtet werden, sodass die vorgestellte Batterie besonders schnell und einfach an einem Fortbewegungsmittel angeordnet werden kann.

Zum elektrischen Koppeln der vorgestellten Batterie mit einem Fortbewegungsmittel ist die Kopplungsschnittstelle zumindest tlw. elektrisch leitend ausgestaltet.

Insbesondere kann die Kopplungsschnittstelle Kopplungselemente umfassen, die elektrisch leitend sind. Bspw. können die Kopplungselemente Bolzen oder Stifte aus einem Metall umfassen, die wiederum eine Metallschicht umfassen, durch die elektrischer Strom aus der Batterie zu dem Fortbewegungsmittel oder ggf. von dem Fortbewegungsmittel in die Batterie fließen kann.

Die Kopplungsschnittstelle, insbesondere ein jeweiliges Kopplungselement, kann über ein Kabel mit weiteren elektrischen Komponenten, wie bspw. jeweiligen Batteriezellen, einem Steuergerät, einer Leistungselektronik oder direkt mit einem elektrischen Antrieb verbunden sein.

Um einen Fluss von elektrischem Strom aus einer Kopplungsschnittstelle lediglich in jeweilige Gegenkopplungsschnittstelle sicherzustellen und entsprechend einen Kurzschluss mit anderen Elementen zu verhindern, kann bzw. können die Kopplungsschnittstelle und/oder die Gegenkopplungsschnittstelle bereichsweise elektrisch isoliert sein. Bspw. kann eine jeweilige Metallschicht von einem elektrischen Isolator, wie bspw. einem Kunststoff, umgeben sein, wobei bspw. ein Bereich, wie bspw. ein Ende des Kopplungselements bzw. einer Aufnahme, von dem elektrischen Isolator ausgespart und entsprechend zur Übertragung des elektrischen Stroms vorgesehen ist.

Zur mechanischen Kopplung kann die Kopplungsschnittstelle der vorgestellten Batterie eine zu einer jeweiligen Gegenkopplungsschnittstelle eines Fortbewegungsmittels korrespondierende Form aufweisen, sodass bspw. die Kopplungsschnittstelle eine Klemmverbindung mit der Gegenkopplungsschnittstelle aufbaut.

Insbesondere dient die Kopplungsschnittstelle der vorgestellten Batterie zum Halten bzw. Fixieren der Batterie in einer vorgegebenen Position an einem Fortbewegungsmittel. Dazu kann die Kopplungsschnittstelle in eine Gegenkopplungsschnittstelle eingreifen oder eine Gegenkopplungsschnittstelle, wie bspw. einen Bolzen, aufnehmen, um einen Kraftschluss zwischen der Kopplungsschnittstelle und der Gegenkopplungsschnittstelle herzustellen.

Es kann vorgesehen sein, dass die Kopplungsschnittstelle mindestens ein Kopplungselement umfasst, das dazu konfiguriert ist, in eine Aufnahme einer Gegenkopplungsschnittstelle einzugreifen und, dadurch bedingt, eine elektrische und kraftschlüssige Verbindung zwischen der Batterie und der Gegenkopplungsschnittstelle herzustellen.

Zum elektrischen und mechanischen Koppeln einer Kopplungsschnittstelle der vorgestellten Batterie mit einer Gegenkopplungsschnittstelle kann das Kopplungselement bspw. als Bolzen oder als Stift ausgestaltet sein, der eine Distanz zwischen der Batterie und der Gegenkopplungsschnittstelle überbrückt und entsprechend eine elektrische und mechanische Verbindung zwischen der Batterie und der Gegenkopplungsschnittstelle bzw. einem entsprechenden Fortbewegungsmittel bereitstellt.

Es kann weiterhin vorgesehen sein, dass die mindestens eine Kopplungsschnittstelle mit der Anzahl Batteriezellen elektrisch gekoppelt und zu einem Batteriegehäuse der Batterie elektrisch isoliert ist.

Um einen Kurzschluss der vorgestellten Batterie mit anderen Elementen, bspw. beim Transport der Batterie zu verhindern, kann ein elektrischer Isolator, wie bspw. ein Kunststoff das Batteriegehäuse der Batterie von einem stromführenden Teil der Kopplungsschnittstelle elektrisch isolieren. Dazu kann bspw. ein Kopplungselement, wie bspw. ein schwenkbarer Bolzen, in einer Gummilagerung an der Batterie angeordnet sein.

Es kann weiterhin vorgesehen sein, dass die Batterie mindestens einen Aktuator zum Bewegen des mindestens einen Kopplungselements zwischen einer Transportstellung und einer Kopplungsstellung umfasst.

Mittels eines Aktuators, wie bspw. einem manuell von einem Nutzer zu bewegenden Hebel oder einem automatisch betriebenen elektrischen Motor, kann ein schwenkbares Element der Kopplungsschnittstelle zwischen einer Transportstellung und einer Kopplungsstellung bewegt werden. Entsprechend kann die mechanische und elektrische Kopplung zwischen der vorgestellten Batterie und einer jeweiligen Gegenkopplungsschnittstelle bzw. einem entsprechenden Fortbewegungsmittel leicht und schnell hergestellt bzw. gelöst werden. Dabei erfolgt die mechanische und elektrische Kopplung bzw. Entkopplung konstruktionsbedingt zeitgleich.

Es kann weiterhin vorgesehen sein, dass der mindestens eine Aktuator eine Benutzerschnittstelle zum Bereitstellen von Energie durch einen Nutzer oder einen elektrischen Antrieb umfasst.

Zum Bewegen des Aktuators kann der Aktuator eine Benutzerschnittstelle, wie bspw. einen Griff oder ein Rad mit einer entsprechenden Stellmechanik umfassen, die eine Bewegung eines Nutzers in Bewegungsenergie zum Bewegen der Kopplungsschnittstelle umwandelt.

Es kann weiterhin vorgesehen sein, dass die Benutzerschnittstelle dazu konfiguriert ist, als Transportschnittstelle zum Transport der Batterie zu wirken, wenn das mindestens eine Kopplungselement in der Transportstellung ist.

Die Benutzerschnittstelle kann eine Doppelfunktion erfüllen, nämlich eine Bewegung eines Nutzers in Energie zum Bewegen des mindestens einen Kopplungselements der Kopplungsschnittstelle umwandeln und als Transportschnittstelle zum Eingriff und Transport durch bspw. einen Nutzer oder eine Maschine dienen, die bspw. ein Halten bzw. Tragen der Batterie an der Transportschnittstelle ermöglicht.

Es kann weiterhin vorgesehen sein, dass die Kopplungsschnittstelle mindestens eine Aufnahme zum Aufnehmen mindestens eines Verbinders des Fortbewegungsmittels umfasst, wobei die mindestens eine Aufnahme dazu konfiguriert ist, den mindestens einen Verbinder zu fixieren und in der Batterie gespeicherte elektrische Energie zu dem mindestens einen Verbinder des Fortbewegungsmittels zu übertragen oder elektrische Energie von dem Fortbewegungsmittel auf die Batterie zu übertragen.

Durch Ausgestaltung der erfindungsgemäß vorgesehenen Kopplungsschnittstelle als Aufnahme kann eine besonders leichte und robuste Ausführung der vorgestellten Batterie bereitgestellt werden. Dabei kann die Kopplungsschnittstelle ein Sicherungselement, wie bspw. ein Schloss oder ein Klemmelement umfassen, das einen Verbinder einer Gegenkopplungsschnittstelle positionsfest sichert, sodass die Batterie positionsfest mit der Gegenkopplungsschnittstelle mechanisch gekoppelt werden kann.

In einem zweiten Aspekt betrifft die vorgestellte Erfindung ein Fortbewegungsmittel mit einer Gegenkopplungsschnittstelle zur mechanischen und elektrischen Kopplung mit einer möglichen Ausgestaltung der vorgestellten Batterie.

Es kann vorgesehen sein, dass die Gegenkopplungsschnittstelle mindestens einen Verbinder zum mechanischen und elektrischen Koppeln mit mindestens einer Aufnahme der Batterie oder mindestens eine Aufnahme zum mechanischen und elektrischen Koppeln mit mindestens einem Kopplungselement der Batterie umfasst, wobei der mindestens eine Verbinder zu einem Rahmen des Fortbewegungsmittels elektrisch isoliert ist.

Mittels eines Verbinders, wie bspw. einem Bolzen oder einem Stift, der zumindest tlw. metallisch ausgestaltet ist, kann eine positionsfeste und sichere sowie elektrisch leitende Verbindung zwischen dem Fortbewegungsmittel und der vorgestellten Batterie hergestellt werden.

Es kann weiterhin vorgesehen sein, dass die Gegenkopplungsschnittstelle, wenn sie mindestens einen Verbinder umfasst, auch mindestens einen Aktuator zum Bewegen des mindestens einen Verbinders zwischen einer Freigabestellung und einer Kopplungsstellung umfasst.

In einem dritten Aspekt betrifft die vorgestellte Erfindung ein Verbindungsverfahren zum Verbinden einer Batterie mit einem Fortbewegungsmittel, bei dem eine mögliche Ausgestaltung der vorgestellten Batterie mit einer möglichen Ausgestaltung des vorgestellten Fortbewegungsmittels zeitgleich elektrisch und mechanisch gekoppelt wird, indem die Kopplungsschnittstelle der Batterie mit der Gegenkopplungsschnittstelle des Fortbewegungsmittels gekoppelt wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
- Figur 1: eine schematische Darstellung einer ersten Ausgestaltung der vorgestellten Batterie,
- Figur 2: eine schematische Darstellung einer zweiten Ausgestaltung der vorgestellten Batterie,
- Figur 3: eine Detaildarstellung einer Benutzerschnittstelle der Batterie gemäß Figur 2,
- Figur 4: eine schematische Darstellung einer möglichen Ausgestaltung des vorgestellten Fahrzeugs.

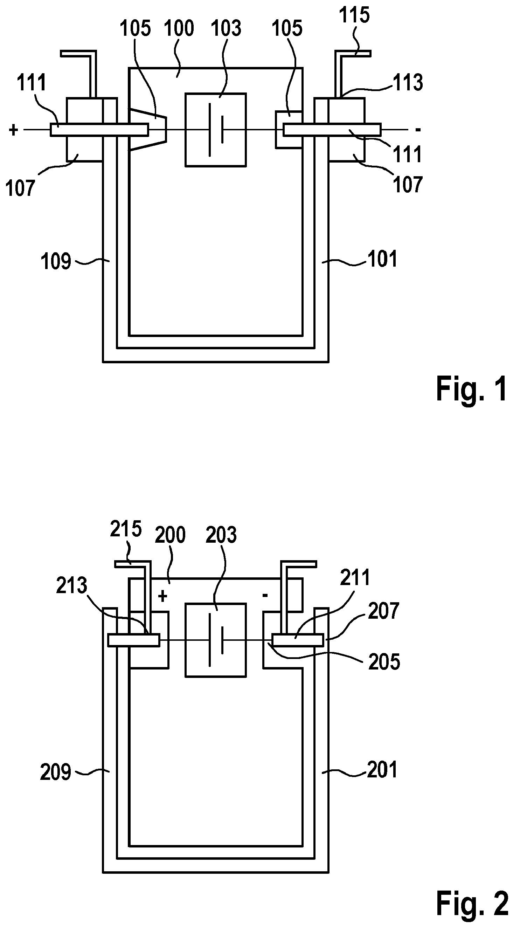

In Figur 1 ist eine Batterie 100 dargestellt. Die Batterie 100 umfasst ein Batteriegehäuse 101, in dem Batteriezellen 103 angeordnet sind.

Ferner umfasst die Batterie 100 Kopplungsschnittstellen 105 zur mechanischen und elektrischen Kopplung mit Gegenkopplungsschnittstellen 107 an einem Halter 109 eines Fortbewegungsmittels.

Die Kopplungsschnittstellen 105 sind als Aufnahmen zum Aufnehmen von Verbindern 111 der Gegenkopplungsschnittstellen 107 ausgestaltet. Entsprechend können die Verbinder 111 in die Kopplungsschnittstellen 105 eingebracht werden, sodass eine kraftschlüssige Verbindung, d.h. eine mechanische Kopplung zwischen dem Halter 109 und der Batterie 100 entsteht.

Da die Verbinder 111 und die Kopplungsschnittstellen 105 zumindest tlw. metallisch sind, bewirkt die mechanische Kopplung bzw. der Kontakt zwischen den Verbindern 111 und den Kopplungsschnittstellen 105 eine elektrische Kopplung zwischen dem Fortbewegungsmittel und der Batterie 100, sodass elektrischer Strom zwischen der Batterie 100 und dem Fortbewegungsmittel strömt.

An Benutzerschnittstellen 113 der Gegenkopplungsschnittstellen 107 können Hebel 115 reversibel eingebracht werden, die als Aktuatoren wirken. Die Hebel 115 können von einem Nutzer gedreht werden, um die Verbinder 111 zwischen einer Freigabestellung, bei der die Batterie 100 aus dem Halter 109 entnommen werden kann und keine elektrische Kopplung zwischen der Batterie 100 und dem Fortbewegungsmittel vorliegt und einer Sicherungsstellung, wie abgebildet, bei der die Batterie 100 mechanisch und elektrisch mit dem Halter 109 bzw. dem Fortbewegungsmittel gekoppelt ist, bewegt werden.

An den Verbindern 111 und/oder den Kopplungsschnittstellen 105 sind optional hier nicht dargestellte elektrische Isolatoren angeordnet, die lediglich an vorgegebenen Kontaktstellen eine elektrische Kontaktierung zwischen den Kopplungsschnittstellen 105 und den Verbindern 111 ermöglichen.

In Figur 2 ist eine Batterie 200 dargestellt. Die Batterie 200 umfasst ein Batteriegehäuse 201, in dem Batteriezellen 203 angeordnet sind.

Ferner umfasst die Batterie 200 Kopplungsschnittstellen 205 zur mechanischen und elektrischen Kopplung mit Gegenkopplungsschnittstellen 207 an einem Halter 209 eines Fortbewegungsmittels.

Die Kopplungsschnittstellen 205 umfassen Kopplungselemente 211 in Form von Bolzen bzw. Stiften zum Eingriff in die Gegenkopplungsschnittstellen 207. Entsprechend können die Kopplungselemente 211 in die Gegenkopplungsschnittstellen 207 eingebracht werden, sodass eine kraftschlüssige Verbindung, d.h. eine mechanische Kopplung zwischen dem Halter 209 und der Batterie 200 entsteht.

Da die Kopplungselemente 211 und die Gegenkopplungsschnittstellen 207 zumindest tlw. metallisch sind, bewirkt die mechanische Kopplung bzw. der Kontakt zwischen den Kopplungselementen 211 und den Gegenkopplungsschnittstellen 207 eine elektrische Kopplung zwischen dem Fortbewegungsmittel und der Batterie 200, sodass elektrischer Strom zwischen der Batterie 200 und dem Fortbewegungsmittel strömt.

An Benutzerschnittstellen 213 der Kopplungsschnittstellen 205 können Hebel 215 reversibel eingebracht werden, die als Aktuatoren wirken. Die Hebel 215 können von einem Nutzer gedreht werden, um die Kopplungselemente 211 zwischen einer Freigabestellung, bei der die Batterie 200 aus dem Halter 209 entnommen werden kann und keine elektrische Kopplung zwischen der Batterie 200 und dem Fortbewegungsmittel vorliegt und einer Sicherungsstellung, wie abgebildet, bei der die Batterie 200 mechanisch und elektrisch mit dem Fortbewegungsmittel gekoppelt ist, bewegt werden.

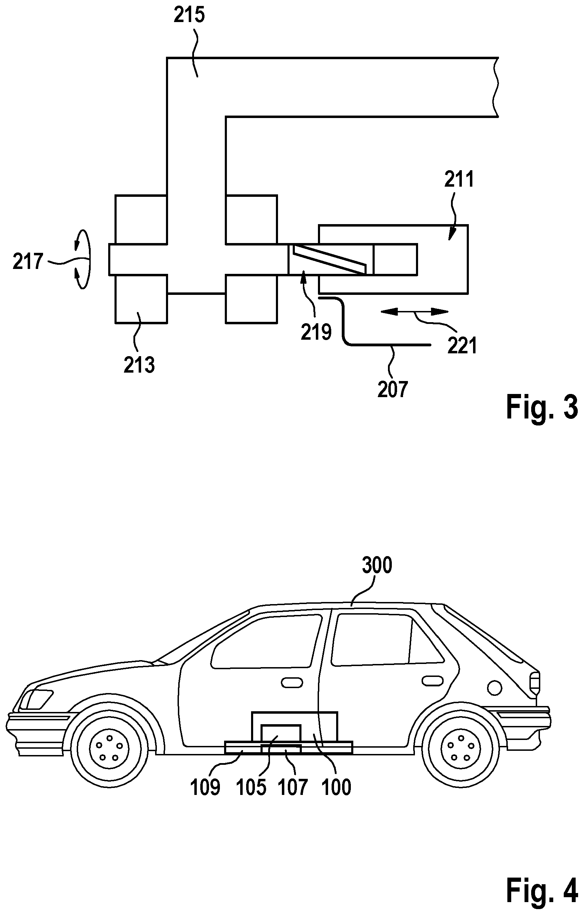

In Figur 3 ist eine Benutzerschnittstelle 213 mit einem darin eingebrachten Hebel 215 dargestellt. Hier ist zu erkennen, dass eine Bewegung des Hebels 215 zu einer Rotation eines Schneckenelements 219 der Benutzerschnittstelle 213 führt, wie durch Pfeil 217 angedeutet.

Durch die Rotationsbewegung des Schneckenelements 219 wird das Kopplungselement 211 in eine lineare Bewegung überführt, wie durch Pfeil 221 angedeutet, so dass sich das Kopplungselement 211, je nach Drehrichtung des Hebels 215, von der Gegenkopplungsschnittstelle 207 weg bzw. zu der Gegenkopplungsschnittstelle 207 hin bewegt, um eine elektrische und mechanische Kopplung mit der Gegenkopplungsschnittstelle 207 herzustellen bzw. zu lösen.

In Figur 4 ist ein Fortbewegungsmittel 300 dargestellt. Das Fortbewegungsmittel 300 ist beispielhaft ein Fahrzeug und umfasst eine Batterie 100 mit einer Kopplungsschnittstelle 105 und einen Halter 109, der in einen Rahmen des Fortbewegungsmittels 300 integriert ist, mit einer Gegenkopplungsschnittstelle 107.

Die Batterie 100 ist mit dem Fortbewegungsmittel 300 über eine Verbindung zwischen der Kopplungsschnittstelle 105 und der Gegenkopplungsschnittstelle 107 elektrisch und mechanisch gekoppelt.

## Patentansprüche

1. Batterie (100, 200) zum Versorgen eines Antriebs eines Fortbewegungsmittels (300) mit elektrischer Energie,
wobei die Batterie (100, 200) umfasst:
- eine Anzahl Batteriezellen (103, 203),
- eine Kopplungsschnittstelle (105, 205) zur mechanischen und elektrischen Kopplung mit dem Fortbewegungsmittel (300),
wobei die Kopplungsschnittstelle (105, 205) dazu konfiguriert ist, positionsfest an einer Gegenkopplungsschnittstelle (107, 207) des Fortbewegungsmittels (300) angeordnet zu werden und die Batterie (100, 200) dadurch mechanisch mit der Gegenkopplungsschnittstelle (107, 207) zu koppeln,
wobei die Kopplungsschnittstelle (105, 205) weiterhin dazu konfiguriert ist, elektrische Energie zwischen der mindestens einen Gegenkopplungsschnittstelle (107, 207) des Fortbewegungsmittels (300) und der Batterie (100, 200) zu übertragen, und die Batterie (100, 200) dadurch elektrisch mit der Gegenkopplungsschnittstelle (107, 207) des Fortbewegungsmittels (300) zu koppeln.

2. Batterie (100, 200) nach Anspruch 1,
**dadurch gekennzeichnet,**
**dass** die Kopplungsschnittstelle (105, 205) mindestens ein Kopplungselement (211) umfasst, das dazu konfiguriert ist, in eine Aufnahme einer Gegenkopplungsschnittstelle (107, 207) einzugreifen und, dadurch bedingt, eine elektrische und kraftschlüssige Verbindung zwischen der Batterie (100, 200) und der Gegenkopplungsschnittstelle (107, 207) herzustellen.

3. Batterie (100, 200) nach Anspruch 2,
**dadurch gekennzeichnet,**
**dass** die mindestens eine Kopplungsschnittstelle (105, 205) mit der Anzahl Batteriezellen (103) elektrisch gekoppelt und zu einem Batteriegehäuse (101) der Batterie (100, 200) elektrisch isoliert ist.

4. Batterie (100, 200) nach Anspruch 2 oder 3,
**dadurch gekennzeichnet,**
**dass** die Batterie (100, 200) mindestens einen Aktuator zum Bewegen des mindestens einen Kopplungselements (211) zwischen einer Transportstellung und einer Kopplungsstellung umfasst.

5. Batterie (100, 200) nach Anspruch 4,
**dadurch gekennzeichnet,**
**dass** der mindestens eine Aktuator eine Benutzerschnittstelle (115) zum Bereitstellen von Energie durch einen Nutzer oder einen elektrischen Antrieb umfasst.

6. Batterie (100, 200) nach Anspruch 5,
**dadurch gekennzeichnet,**
**dass** die Benutzerschnittstelle (115) dazu konfiguriert ist, als Transportschnittstelle zum Transport der Batterie (100, 200) zu wirken, wenn das mindestens eine Kopplungselement (211) in der Transportstellung ist.

7. Batterie (100, 200) nach Anspruch 1,
**dadurch gekennzeichnet,**
**dass** die Kopplungsschnittstelle (105, 205) mindestens eine Aufnahme zum Aufnehmen mindestens eines Verbinders (111) des Fortbewegungsmittels (300) umfasst, wobei die mindestens eine Aufnahme dazu konfiguriert ist, den mindestens einen Verbinder (111) zu fixieren und in der Batterie (100, 200) gespeicherte elektrische Energie zu dem mindestens einen Verbinder (111) des Fortbewegungsmittels (300) zu übertragen oder elektrische Energie von dem Fortbewegungsmittel (300) auf die Batterie (100, 200) zu übertragen.

8. Fortbewegungsmittel (300) mit einer Gegenkopplungsschnittstelle (107, 207) zur mechanischen und elektrischen Kopplung mit einer Batterie (100, 200) nach einem der Ansprüche 1 bis 7.

9. Fortbewegungsmittel (300) nach Anspruch 8,
**dadurch gekennzeichnet,**
**dass** die Gegenkopplungsschnittstelle (107, 207) mindestens einen Verbinder (111) zum mechanischen und elektrischen Koppeln mit mindestens einer Aufnahme der Batterie (100, 200) oder mindestens eine Aufnahme zum mechanischen und elektrischen Koppeln mit mindestens einem Kopplungselement der Batterie (100, 200) umfasst,
wobei der mindestens eine Verbinder (111) zu einem Rahmen des Fortbewegungsmittels (300) elektrisch isoliert ist.

10. Fortbewegungsmittel (300) nach Anspruch 9,
**dadurch gekennzeichnet,**
**dass** die Gegenkopplungsschnittstelle (107, 207), wenn die Gegenkopplungsschnittstelle (107, 207) mindestens einen Verbinder (111) umfasst, mindestens einen Aktuator zum Bewegen des mindestens einen Verbinders (111) zwischen einer Freigabestellung und einer Kopplungsstellung umfasst.

11. Verbindungsverfahren zum Verbinden einer Batterie (100, 200) mit einem Fortbewegungsmittel,
bei dem eine Batterie (100, 200) nach einem der Ansprüche 1 bis 7 mit einem Fortbewegungsmittel (300) nach einem der Ansprüche 8 bis 10 zeitgleich elektrisch und mechanisch gekoppelt wird, indem die Kopplungsschnittstelle (105, 205) der Batterie (100, 200) mit der Gegenkopplungsschnittstelle (107, 207) des Fortbewegungsmittels (300) gekoppelt wird.
